# EUROPEAN PATENT SPECIFICATION

(11) **EP 2 072 635 B1**
(45) Date of publication and mention of the grant of the patent: **27.10.2010**
(21) Application number: 08161044.6
(22) Date of filing: 24.07.2008
(51) Int. Cl.: C23C 26/00, C22C 47/14, C22C 49/06, C22C 49/14, C01B 31/08, C01B 31/12

(54) **Encapsulation of carbon material within aluminum**
Einkapselung von Kohlenstoffmaterial in Aluminium
Encapsulation de matériau carboné dans de l'aluminium

(30) Priority: 21.12.2007 KR 20070135267
(43) Date of publication of application: 24.06.2009
(73) Proprietor: Sungkyunkwan University Foundation for Corporate Collaboration, Jangan-gu, Suwon-si, Gyeonggi-do (KR); Dayou Smart Aluminium Co., Ltd., Seo-gu Gwangju (KR)
(72) Inventor: So, Kang Pyo, Namwon-si, Jeollabuk-do (KR); Lee, Young Hee, Geumgok-dong, Gwonseon-gu, Suwon-si, Gyeonggi-do (KR)
(74) Representative: Kahlhöfer, Hermann

(56) References cited:
- WO-A-2006/099392
- US-A1- 2007 134 496
- DENG ET AL: "Processing and properties of carbon nanotubes reinforced aluminum composites" MATERIALS SCIENCE AND ENGINEERING A: STRUCTURAL MATERIALS:PROPERTIES, MICROSTRUCTURE & PROCESSING, LAUSANNE, CH, vol. 444, no. 1-2, 9 December 2006 (2006-12-09), pages 138-145, XP005799920 ISSN: 0921-5093
- NOGUCHI T ET AL: "CARBON NANOTUBE/ALUMINIUM COMPOSITES WITH UNIFORM DISPERSION" MATERIALS TRANSACTIONS. JIM, SENDAI, JP, vol. 45, no. 2, 1 February 2004 (2004-02-01), pages 602-604, XP008051208 ISSN: 0916-1821

## Description

### Technical Field to which the invention belongs

The present invention relates to a method of encapsulating a carbon material within aluminum.

### Related Background Art

In general, aluminum is widely used in everyday life, from foil used in a kitchen, to disposable tableware, windows, cars, airplanes, spaceships, etc. Aluminum is light in weight (about one-third the weight of iron), and has high strength by alloying with other metals. Also, aluminum is chemically stable because a chemically stable oxide layer existing on an aluminum surface inhibits development of corrosion caused by moisture or oxygen, etc.

Therefore, aluminum has been used for cars, airplanes, etc. especially, an aluminum wheel used for cars provides two effects in that its lighter weight than a conventional iron wheel decreases its own load, which contributes to lowering the weight of a car body, as well as improving fuel efficiency. However, such aluminum has tensile strength of about 40% based on iron. Accordingly, the use of the aluminum as a structural material significantly increases the thickness of a structural aluminum pipe or panel, and thus a large amount of material is required, thereby causing a problem in that an excessive cost is required.

In order to solve the above described problems, research on preparation of a composite material of a carbon material having high tensile strength and aluminum has been actively carried out. In the preparation of a carbon material-aluminum composite, there are problems to be overcome. First, carbon materials, e.g., carbon nanotubes have high interactive cohesive force by Van der Waals force, and thus are difficult to be uniformly dispersed in aluminum matrix. Second, a carbon material and an aluminum matrix have different surface tensions. A good example showing great difference in surface tensions is water and oil, water being 2-3 times as great as oil. However, a recent research report revealed that surface tension of aluminum is 955 mN/m, and surface tension of a carbon material is 45.3 mN/m [based on J.M. Molina et al. international Journal of adhesion Adhesives 27 (2007) 394-401, S. Nuriel, L. Liu, A.H. Barber, H.D. Wagner. Direct measurement of multiwall nanotube surface tension, Chemical Physics Letters 404 (2005) 263-266]. That is, the difference in surface tensions between these two materials is about 20 times greater than the other. This result says that the two materials are hard to be mixed with each other. Also, since the density of the two materials are significantly different, they are hardly mixed with each other when they are melted.

In order to overcome such problems of a carbon material, and to prepare a carbon material-aluminum composite, a variety of attempts such as gas blending, solution dispersion, electroplating, ball mill, etc. have been made.

The gas blending is a technology on gas-mixing of metal powder and a carbon nanotube, and there was Japanese Patent Laid-Open Publication No. 2007-16262 (2007.1.25), regarding the technology. In the gas mixing, various kinds of metal powder, including aluminum, can be used to uniformly mix with a carbon nanotube. However, the carbon nanotube is difficult to prepare an aluminum-carbon material composite, in which the carbon material is uniformly dispersed on the aluminum matrix, due to difficulty in penetration into an aluminum particle having an oxide layer.

In the solution dispersion, a composite is prepared by mixing a minute aluminum particle-dispersed solution with a carbon nanotube-dispersed solution, and drying a solvent, and there was Chinese Patent Laid-Open Publication No. CN1465729A, regarding the technology. In the mix in a solution, a carbon nanotube can be uniformly dispersed. However, in order to obtain a significant effect through the mix in a solution, a small sized aluminum particle is required, and the use of such a small sized aluminum particle may cause an explosion. Also, a carbon nanotube is difficult to penetrate into an oxide layer of an aluminum particle in this method. In this respect, there has been a problem in preparing the composite.

The electroplating means a method of preparing a composite material plating solution, applying a potential, and plating a composite material (Japanese Patent Laid-Open Publication No. 2007-070689). In this technology, a carbon nanotube and aluminum are dissolved in a plating solution so that the two materials can reach the surface of the cathode, thereby forming a composite. In this method, however, there is a disadvantage in that the binding force between aluminum and carbon material cannot be controlled and the yield decreases.

The ball mill is a technology on a mix of a carbon nanotube with aluminum through high physical impact by using a ball having high physical force, and there was Japanese Patent Laid-Open Publication No. 2006-315893(2006.11.24), regarding the technology. In the ball mill method described in the patent, a cocoon- thread-like complicatedly twisted carbon nanotube is milled and dispersedly mixed with an aluminum particle. However, this method still has the disadvantage that the carbon nanotube cannot penetrate into an oxide layer of aluminum but is merely mixed with the aluminum.

### Disclosure of the Invention

Therefore, the present invention has been made in view of the above-mentioned problems, and the present invention provides a method of encapsulating a carbon material within an aluminum through ball mill. In the encapsulated carbon material prepared by the method according to the present invention, the crystallinity can be maintained as it is without destruction of the structure, thereby improving the strength. In other words, it is the object of the present invention to provide a method of encapsulating a carbon material within aluminum through a ball mill while maintaining the crystallinity of the carbon material.

It is another object of the present invention to provide a method of fabricating an aluminum-carbon material composite by encapsulating a carbon material within an aluminum through a ball mill.

It is yet another object of the present invention to provide a carbon material-aluminum composite fabricated according to the above method.

According to an aspect of the present invention, there is provided a method of encapsulating a carbon material within aluminum. The term 'Encapsulation' used in the present invention indicates the coating of a carbon material with aluminum.

The object of the present invention is to provide a method of encapsulating a functionalized carbon material within aluminum by using a ball mill method. In other words, the present invention provides a method of encapsulating a carbon material within aluminum, the method including the steps of: (i) functionalizing a carbon material by introducing a defect therein; (ii) mixing the functionalized carbon material with aluminum; and (iii) ball milling the mixture under an inert gas atmosphere.

In the present invention, the carbon material may include one or at least two kinds of materials selected from the group including graphite, a graphite fiber, a carbon fiber, a carbon nano fiber, and a carbon nanotube.

At present, it is known that an available carbon material has a diameter of 0.4 nm to 16 µm, and a length of 10 nm to 10 cm. Specifically, based on recently reported data (Science 292, 2462 (2001*)*)*,* a carbon nanotube has the smallest diameter size of 0.4nm, and a carbon fiber (in the case of a commercialized product) has the largest diameter of 16 µm (Taiwan Carbon Technology Co). A multi-walled carbon nanotube and an NK carbon nanotube, which were used as carbon materials in the present invention, have diameters of 10 to 20 nm, and 40 to 60 nm, and lengths of 10 to 20 µm, and about 20 µm, respectively. Also, a carbon fiber (Toray) has a diameter of 7~8 µm, and a length of 5 mm. However, the method according to the present invention is not limited to the above described sizes of a carbon material.

In step (i), in order to functionalize the carbon material by introducing a defect therein, acid treatment may be carried out. In the acid treatment, nitric acid (HNO₃), sulfuric acid (H₂SO₄), or acid including a mixture of nitric acid and sulfuric acid may be used. A carbon nanotube includes a sp² hybrid bond, and has a cylindrical structure. However, such a structure of the carbon nanotube has a smooth surface, and thus is difficult to be bonded with other materials. Therefore, as a carbon nanotube used for a composite, material having a defect capable of bonding with a matrix, such as a groove, is used. Also, through a functionalization process, a functional group having certain reactivity to the defect, such as -OH, - COOH, -CHO, etc. is attached to a carbon material to increase the reactivity.

In step (i), in order to functionalize the carbon material by introducing a defect therein, microwave treatment may be carried out. In the microwave treatment, as a solvent, a mixture including one or at least two kinds of materials selected from the group including ethylene glycol, nitric acid (HNO₃), and sulfuric acid (H₂SO₄) may be used. Herein, a time for the microwave treatment may be 1 to 10 minutes.

In step (i), in order to functionalize the carbon material by introducing a defect therein, plasma treatment may be carried out. In the plasma treatment, mixed gas including one or at least two kinds of materials selected from the group including oxygen, argon, and helium may be used. Herein, electric power of 50 to 1000 W may be used, and a time for the treatment may be 1 minute to 1 hour.

Although acid/microwave/plasma treatments are described as methods for functionalizing a carbon material by introducing a defect therein in step (i), the method according to the present invention is not limited thereto.

The term "functionalize" as used herein means forming a defect in a carbon material and attaching a functional group to the defect.

In step (ii), the mixing ratio of the carbon material to aluminum may be 0.1 to 50 wt%.

In step (iii), in order to compose the inert gas atmosphere for the mixture, inert gas, such as argon, nitrogen, helium, or neon, may be used. Also, in order to encapsulate carbon material powder within aluminum, a ball mill process may be carried out at 100 to 5000 rpm, for 30 minutes to 7 days. However, the method according to the present invention is not limited to the above described rpm and time.

According to another aspect of the present invention, there is provided a method of fabricating an aluminum-carbon material composite by encapsulating a carbon material within aluminum through a ball mill. The method comprises the steps of: (i) functionalizing the carbon material by introducing a defect therein; (ii) mixing the functionalized carbon material with aluminum; and (iii) ball milling the mixture under an inert gas atmosphere, thereby encapsulating a carbon material within aluminum.

Additionally, in order to increase reactivity of a carbon material, step (i) may be performed by treatment of acid, microwave, or plasma, as described above. The condition of a ball mill and the feature of the carbon material are the same as those described above.

In the field of a carbon material (such as a carbon nanotube) composite, a main problem to solve is to uniformly disperse the carbon material within a metal matrix and to cause an interaction therebetween, thereby improving the properties [Carbon Nanotube/Aluminium Composites with Uniform Dispersion*, Materials Transactions, Vol. 45, No. 2 (2004) pp. 602-604]. In order to uniformly disperse a carbon material, especially, a carbon nanotube, within a metal substrate, the carbon material and the metal substrate have to have similar physical properties (molecular/atomic interaction therebetween). The above description may be explained by the separation of water from oil in everyday life, which is caused by different surface tensions of two materials, and herein, the surface tensions indicate an interaction therebetween. Water has a surface tension of 72 mN/m, which is twice or more as large as that (28.9 mN/m) of oil (benzene). Also, as described above, a surface tension of aluminum is about twenty times as large as that of a carbon nanotube. Therefore, encapsulation of a carbon material, particularly a carbon nanotube within aluminum may solve the problem, and thus cause an improved effect in uniformly dispersing the carbon material within an aluminum matrix. From the standpoint related to high physical properties, a high strength composite may be prepared [Processing and properties of carbon nanotubes reinforced aluminum composites, Materials Science and Engineering A 444 (2007) 138-45].

### Brief Description of the Drawings

The foregoing and other objects, features and advantages of the present invention will become more apparent from the following detailed description when taken in conjunction with the accompanying drawings in which:
FIG. 1 is a flow chart illustrating a method of encapsulating a carbon material within aluminum according to an embodiment of the present invention;
FIG. 2 illustrates optical photographs of carbon materials encapsulated within aluminum, which were taken before and after experiments;
FIG. 3 illustrates electron microscopic analysis on a carbon material encapsulated within aluminum;
FIG. 4 illustrates Raman analysis on carbon materials encapsulated within aluminum; FIG. 5 illustrates optical photographs on a corrosion removing process of aluminum capsules of a carbon material encapsulated within aluminum
   ; and
FIG. 6 illustrates an electron microscopic photograph of a carbon material encapsulated within aluminum which was taken after the removal of the corrosion of the aluminum capsules.

### Description of Special Embodiment

The present invention provides a method of encapsulating a carbon material within aluminum by using a ball mill method. The method includes the steps of: (i) functionalizing a carbon material by introducing a defect therein; (ii) mixing the functionalized carbon material with aluminum; and (iii) ball milling the mixture under an inert gas atmosphere.

Reference will now be made in detail to the preferred embodiments of the present invention. However, the following examples are illustrative only, and the scope of the present invention is not limited thereto. The contents of documents cited in the present invention are hereby incorporated by reference.

### Examples

### Example 1: encapsulation of a carbon material within aluminum

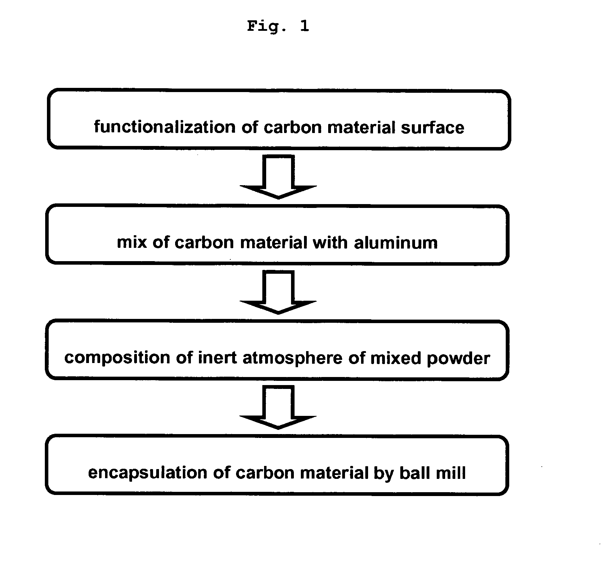

An embodiment of the present invention is described in FIG. 1. As carbon materials, a multi-walled carbon nanotube (ILJIN Nanotech, CM95), an NK carbon nanotube (nanokarbon, hellow CNT 75), and a carbon fiber (Toray - Japan, T 300) were used. Herein, the multi-walled carbon nanotube and the NK carbon nanotube had diameters of 10 to 20 nm, and 40 to 60 nm, and lengths of 10 to 20 µn, and 20 µm, respectively.

### 1-1 Functionalization of a carbon material by acid treatment

The carbon nanotube was functionalized by an ultrasonic reaction in a water tank type reactor containing 70% nitric acid (HNO₃) for 10 minutes to 3 hours. As the NK carbon nanotube, a functionalized product was used. The carbon fiber was functionalized by an ultrasonic reaction in a 1:1 mixture of sulfuric acid (H₂SO₄) and nitric acid (HNO₃) for 2 hours.

### 1-2 Functionalization of a carbon material by microwave treatment

In a method of functionalization by using microwave, ethylene glycol or nitric acid (HNO₃) was used as a solvent, sodium chlorate (NaClO₃) was used as a oxidation agent, and the multi-walled carbon nanotube was dispersed to the solvent. The microwave treatment was carried in a microwave oven (Daewoo Electronics, KR-U20AB) for 3 minutes, and herein such a treatment time may be 1 to 6 minutes.

### 1-3 Functionalization of a carbon material by plasma treatment

Plasma treatment was carried out on the multi-walled carbon nanotube by using power consumption of 500 W in atmospheric pressure, and herein, as gas material, 500 sccm of oxygen and 300 sccm of helium were used. The plasma treatment was carried out by using A-tech system product for 5 minutes to functionalize through introduction of a defect.

### 1-4 Encapsulation of a carbon material within aluminum by ball mill

19 g of aluminum powder and 1 g of a multi-walled carbon nanotube, an NK carbon nanotube, or a carbon fiber as a carbon material were used. The aluminum was purchased from Samchun Chemical. Each of the functionalized carbon material was mixed with aluminum powder in a ratio of 5 wt% by weight by using a ball mill, and the mixture was put into a metal jar made of steel. The ball was a zirconia ball (Daehan, DH, ML 1032) with a diameter of 0.5-10 mm. The weight ratio of the aluminum particles including a carbon nanotube or a carbon fiber to the zirconia ball was 1:4. To prevent oxidation of aluminum, the jar was filled with argon gas. After the jar, from which oxygen and moisture were sufficiently removed, was securely sealed, a ball mill process could be carried out at 50 to 400 rpm. It was possible to set a ball mill time within a range of 1 to 24 hours.

### Example 2: observation of a change in colors after encapsulation of a carbon material within aluminum

A change in colors before/after encapsulation of a carbon material within aluminum was taken by a digital camera (Nikon, koolpix-3700).

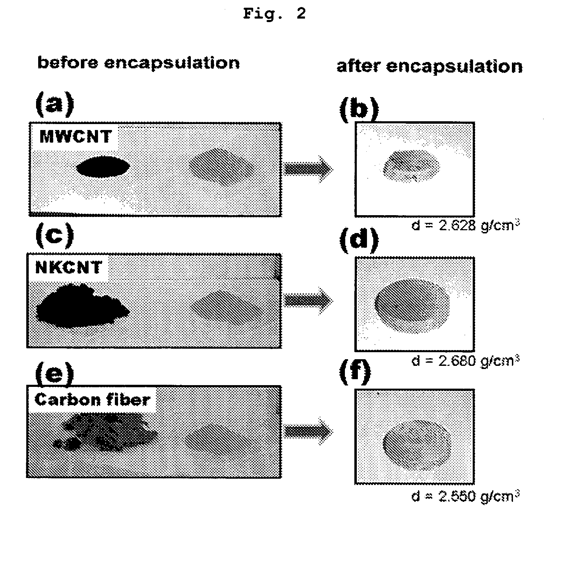

FIG. 2a is a photograph of a multi-walled carbon nanotube before aluminum encapsulation, and shows actual volumes before encapsulation of the multi-walled carbon nanotube within aluminum. FIG. 2b is a photograph of an aluminum-encapsulated multi-walled carbon nanotube. Compared to FIG. 2a before the encapsulation, the aluminum-encapsulated multi-walled carbon nanotube shows an apparent color of silver-white, which is the same as that of aluminum. Accordingly, it is determined that the multi-walled carbon nanotube was completely aluminum-encapsulated.

FIG. 2c is a photograph of an NK carbon nanotube before aluminum encapsulation. The NK carbon nanotube is a kind of multi-walled carbon nanotube, and has a thicker diameter than a general multi-walled carbon nanotube, and many functional groups on the surface thereof. Also, the apparent volume of the NK carbon nanotube is greater than that of aluminum powder. FIG. 2d is a photograph of the NK carbon nanotube after aluminum encapsulation. Since the NK carbon nanotube shows an apparent color of silver-white which is the same as that of aluminum, it is determined that the NK carbon nanotube was aluminum-encapsulated.

FIG. 2e is a photograph of a carbon fiber before aluminum encapsulation. As shown in FIG. 2e, the apparent volume of the carbon fiber is more than that of aluminum powder, in the same manner of the NK carbon nanotube. FIG. 2f is a photograph of the carbon fiber after aluminum encapsulation. Since the carbon fiber has a silver-white luster, it is determined that the carbon fiber was completely aluminum-encapsulated.

### Example 3: electron microscopic photograph after encapsulation of a carbon material within aluminum

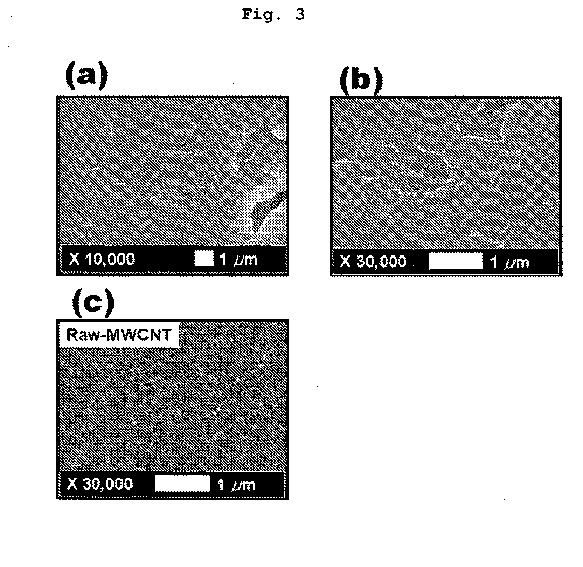

FIG. 3 illustrates electron microscopic photographs (JEOL, JSM7000F) of a multi-walled carbon nanotube after aluminum encapsulation. FIG. 3a is a photograph of the surface of an aluminum-encapsulated multi-walled carbon nanotube, which was taken by an electron microscope (x10,000). FIG. 3b is an electron microscopic photograph of the same portion as FIG. 3a (x30,000). FIG. 3c is an electron microscopic photograph of the multi-walled carbon nanotube before the aluminum encapsulation (x30,000). Under the same magnification (x30,000), comparing FIG. 3c, that is, a photograph before the aluminum encapsulation, and FIG. 3b, that is, a photograph after the aluminum encapsulation, it is determined that in FIG. 3c, a multi-walled carbon nanotube is not observed. Also, since the material observed in FIG. 3b was found to be aluminum according to analysis on elements, it is determined that the multi-walled carbon nanotube was aluminum encapsulated.

### Example 4: Raman analysis on a carbon material encapsulated within aluminum

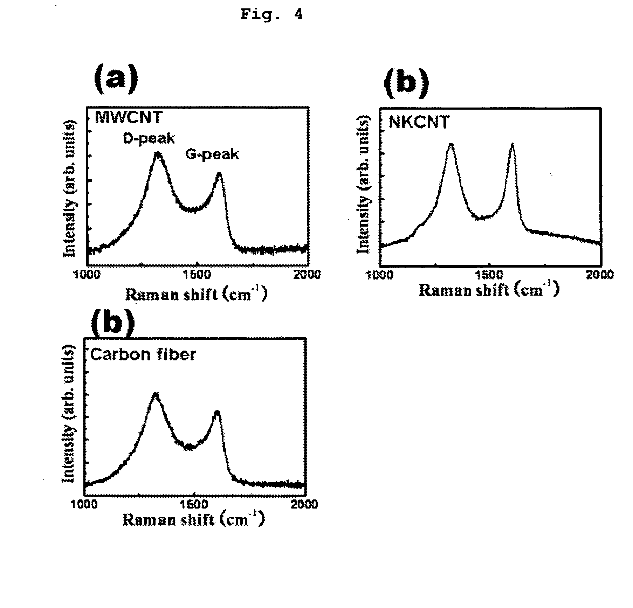

FIG. 4 illustrates Raman analysis on carbon materials encapsulated within aluminum. In the Raman analysis, measurement on the surfaces of encapsulated test samples was carried out by 633 nm He/Ne laser (Renishaw, Invia Basic model). FIG. 4a illustrates a Raman spectrum of a multi-walled carbon nanotube encapsulated within aluminum. The graph shows a G peak and D peak, which indicate the crystallinity of the multi-walled carbon nanotube. This result means that the crystallinity of the carbon nanotube is maintained as it is after the aluminum encapsulation. FIGs. 4b and 4c illustrate Raman spectrums of an NK carbon nanotube and a carbon fiber, respectively. In the same manner of the multi-walled carbon nanotube, these graphs indicate that the crystallinity of the carbon materials is maintained as it is.

### Example 5: Removal of aluminum capsules

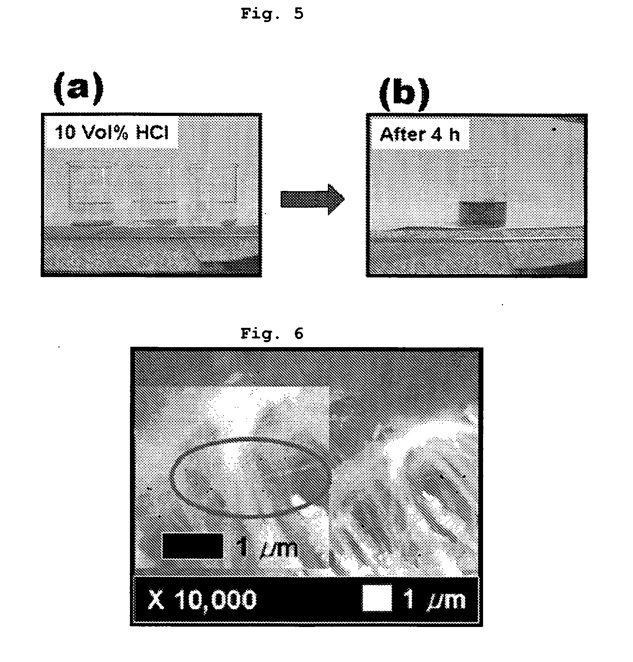

FIG. 5 illustrates optical photographs on a process of removing aluminum capsules. Aluminum capsules were corroded in 10 vol% HCl solution for 4 hours. FIG. 5a is an optical photograph of aluminum capsules including multi-walled carbon nanotubes in 10 vol% HCl. FIG. 5b is an optical photograph of the aluminum capsules after corrosion for 4 hours. After the corrosion for 4 hours, the solution becomes a black turbid solution. FIG. 6 illustrates an electron microscopic photograph (JEOL, JSM7000F) of a multi-walled carbon nanotube of which an aluminum capsule was removed, which was obtained from the turbid solution by vacuum filtration. According to the electron microscopic analysis, it is determined that in the multi-walled carbon nanotube, its structure is maintained as a long linear structure without breakage. This result corresponds to the Raman analysis as shown in FIG. 4 in which the carbon nanotube is maintained as it is.

### Industrial Applicability

Based on the color-change observation, electron microscopic photographs, Raman analysis, aluminum capsule removal of an aluminum encapsulated carbon material, it is determined that in an aluminum encapsulated carbon material according to the present invention, the crystallinity can be maintained as it is. A carbon material-aluminum composite according to the present invention is light and has high strength, and thus can be applied te a car component and an aluminum wheel. Accordingly, the market of aluminum wheels is expected to cover commercial vehicles and heavy duty trucks as well as cars. Also, such a composite is expected to be used for airplanes, spaceships, ships, etc., which requires high strength. In addition, the composite is expected to be applied for components of a computer, and various refrigeration machines due to high thermal conductivity.

## Claims

1. A method of encapsulating a carbon material within aluminum, the method comprising the steps of:
(i) functionalizing the carbon material by introducing a defect therein by treating it with at least one of the following treatments:
- acid treatment,
- microwave treatment,
- plasma treatment,
- ultrasonic wave treatment;
(ii) mixing the functionalized carbon material treated in step (i) with aluminum; and
(iii) ball milling the mixture formed in step (ii) under an inert gas atmosphere.

2. The method as claimed in claim 1, wherein step (i) is performed by an ultrasonic reaction in nitric acid (HNO₃), sulfuric acid (H₂SO₄), or a 1:1 mixture of nitric acid and sulfuric acid.

3. The method as claimed in claim 1, wherein step (i) is performed by dispersing the carbon material to one or at least two kinds of mixtures selected from a group including ethylene glycol, nitric acid(HNO₃) and sulfuric acid (H₂SO₄); and carrying out microwave treatment for 1 to 10 minutes.

4. The method as claimed in claim 1 or 2, wherein step (i) is performed by carrying out plasma treatment on the carbon material for 1 minute to 1 hour, the plasma formed by using one or at least two kinds of mixture gases selected from a group including oxygen, argon, and helium, and using electric power of 50 to 1000 W.

5. The method as claimed in any of claims 1 to 4, wherein the step (iii) is performed by ball milling the carbon material-aluminum mixture at 100 to 5000 rpm, for 30 minutes to 7 days.

6. The method as claimed in any one of claims 1 to 5, wherein the carbon material is one or at least two kinds of mixtures selected from a group including graphite, a graphite fiber, a carbon fiber, a carbon nano fiber, and a carbon nanotube.

7. The method as claimed in any one of claims 1 to 5, wherein the carbon material has a diameter 0.4 nm to 16 µm, and a length of 10 nm to 10 cm.

8. The method of any one of claims 1 to 7 for fabricating an aluminum-carbon material composite, whereby a carbon material is encapsulated within aluminum.

## Patentansprüche

1. Verfahren zum Einkapseln eines Kohlenstoffmaterials in Aluminium, wobei das Verfahren folgende Schritte umfasst:
(i) das Funktionalisieren des Kohlenstoffmaterials durch Erzeugen eines Defekts darin durch Behandeln desselben mit mindestens einer der folgenden Behandlungen:
- saurer Behandlung,
- Mikrowellenbehandlung,
- Plasmabehandlung,
- Ultraschallwellenbehandlung;
(ii) das Mischen des in Schritt (i) behandelten funktionalisierten Kohlenstoffmaterials mit Aluminium; und
(iii) das Mahlen in einer Kugelmühle der in Schritt (ii) gebildeten Mischung unter einer Inertgasatmosphäre.

2. Verfahren nach Anspruch 1, wobei der Schritt (i) durch eine Ultraschallreaktion in Salpetersäure (HNO₃), Schwefelsäure (H₂SO₄) oder einer Mischung von Salpetersäure und Schwefelsäure von 1:1 durchgeführt wird.

3. Verfahren nach Anspruch 1, wobei der Schritt (i) durch Dispergieren des Kohlenstoffmaterials in eine oder mindestens zwei Arten von Mischungen ausgewählt aus einer Gruppe, die Ethylenglykol, Salpetersäure(HNO₃) und Schwefelsäure (H₂SO₄) umfasst, und Ausführen der Mikrowellenbehandlung für 1 bis 10 Minuten durchgeführt wird.

4. Verfahren nach Anspruch 1 oder 2, wobei der Schritt (i) durch Ausführen von Plasmabehandlung am Kohlenstoffmaterial für 1 Minute bis 1 Stunde, wobei das Plasma durch Verwendung von einer oder von mindestens zwei Arten von Mischgasen gebildet wird, die aus einer Gruppe ausgewählt werden, die Sauerstoff, Argon und Helium umfasst, mit Hilfe von elektrischem Strom von 50 bis 1000 W durchgeführt wird.

5. Verfahren nach einem der Ansprüche 1 bis 4, wobei der Schritt (iii) durch Mahlen der Mischung von Kohlenstoffmaterial und Aluminium in einer Kugelmühle bei 100 bis 5000 UpM für 30 Minuten bis 7 Tage durchgeführt wird.

6. Verfahren nach einem der Ansprüche 1 bis 5, wobei das Kohlenstoffmaterial eine oder mindestens zwei Arten von Mischungen ist, die aus einer Gruppe ausgewählt werden, die Graphit, eine Graphitfaser, eine Kohlenstofffaser, eine Kohlenstoffnanofaser und eine Kohlenstoffnanoröhre umfasst.

7. Verfahren nach einem der Ansprüche 1 bis 5, wobei das Kohlenstoffmaterial einen Durchmesser von 0,4 nm bis 16 µm und eine Länge von 10 nm bis 10 cm aufweist.

8. Verfahren nach einem der Ansprüche 1 bis 7 zum Herstellen eines Aluminium-Kohlenstoffmaterial-Verbundstoffs, wobei ein Kohlenstoffmaterial in Aluminium eingekapselt wird.

## Revendications

1. Procédé d'encapsulation d'un matériau carboné dans de l'aluminium, le procédé comprenant les étapes consistant à :
(i) fonctionnaliser le matériau carboné en y introduisant un défaut en le traitant par l'un au moins des traitements suivants :
- traitement acide,
- traitement par micro-ondes,
- traitement par plasma,
- traitement par ultrasons ;
(ii) mélanger le matériau carboné fonctionnalisé traité à l'étape (i) avec de l'aluminium ; et
(iii) broyer par boulets le mélange formé à l'étape (ii) sous une atmosphère de gaz inerte.

2. Procédé selon la revendication 1, dans lequel l'étape (i) est exécutée par une réaction par ultrasons dans de l'acide nitrique (HNO₃), de l'acide sulfurique (H₂SO₄) ou un mélange 1 : 1 d'acide nitrique et d'acide sulfurique.

3. Procédé selon la revendication 1, dans lequel l'étape (i) est exécutée en dispersant le matériau carboné dans un ou au moins deux types de mélanges choisis dans un groupe comprenant l'éthylène glycol, l'acide nitrique (HNO₃) et l'acide sulfurique (H₂SO₄), et en réalisant un traitement par micro-ondes pendant 1 à 10 minutes.

4. Procédé selon la revendication 1 ou 2, dans lequel l'étape (i) est exécutée en réalisant un traitement par plasma sur le matériau carboné pendant 1 minute à 1 heure, le plasma étant formé en utilisant un ou au moins deux types de mélanges gazeux choisis dans un groupe comprenant l'oxygène, l'argon et l'hélium, et en utilisant une puissance électrique de 50 à 1000 W.

5. Procédé selon l'une quelconque des revendications 1 à 4, dans lequel l'étape (iii) est exécutée en broyant par boulets le mélange matériau carboné-aluminium à 100 à 5000 tr/min, pendant 30 minutes à 7 jours.

6. Procédé selon l'une quelconque des revendications 1 à 5, dans lequel le matériau carboné est un ou au moins deux types de mélanges choisis dans un groupe comprenant le graphite, une fibre de graphite, une fibre de carbone, une nanofibre de carbone et un nanotube de carbone.

7. Procédé selon l'une quelconque des revendications 1 à 5, dans lequel le matériau carboné à un diamètre de 0,4 nm à 16 µm, et une longueur de 10 nm à 10 cm.

8. Procédé selon l'une quelconque des revendications 1 à 7 pour fabriquer un composite aluminium-matériau carboné, dans lequel un matériau carboné est encapsulé dans de l'aluminium.
